# EUROPEAN PATENT SPECIFICATION

(11) **EP 0 483 848 B1**
(45) Date of publication and mention of the grant of the patent: **27.12.1995**
(21) Application number: 91118618.7
(22) Date of filing: 31.10.1991
(51) Int. Cl.: B60H 3/00

(54) **Vehicle installed fragrance supplying apparatus and deodorant accommodating vessel**
Riechstoffversorgungsvorrichtung für Fahrzeug und Deodorantbehälter
Dispositif d'alimentation de parfum installé dans une voiture et récipient pour le déodorant

(30) Priority: 02.11.1990 JP 298105/90; 18.01.1991 JP 4689/91
(43) Date of publication of application: 06.05.1992
(73) Proprietor: NIPPONDENSO CO., LTD., Kariya-city Aichi-pref., 448 (JP)
(72) Inventor: Nishino, Tomohide, Kita-ku, Nagoya-shi, Aichi (JP); Fukuta, Toshiaki, Nagoya-shi, Aichi (JP); Sassa, Yukiya, Nagoya-shi, Aichi (JP); Okamoto, Kunio, Okazaki-shi, Aichi (JP); Akado, Hajime, Anjo-shi, Aichi (JP)
(74) Representative: Klingseisen, Franz, Dipl.-Ing.

(56) References cited:
- DE-U- 9 003 654
- US-A- 4 677 902
- US-A- 4 913 034
- PATENT ABSTRACTS OF JAPAN vol. 14, no. 231 (M-974)(4174) 16 May 1990 & JP-A-02 060 821 (NIPPON DENSO) 1 March 1990

## Description

### BACKGROUND OF THE INVENTION

### 1. Field of the Invention

The present invention relates to a vehicle installed fragrance supplying apparatus, the apparatus of which may hold a pleasant fragrance for a long time serving as a moderate stimulus to a crew and include a deodorant vessel that accommodates a deodorant such as an odor removing agent and fragrant agent etc. and exhales a deodorant component.

### 2. Description of the Related Art

A conventional vehicle installed fragrance supplying apparatus that dissolves uncomfortable odors and emits a desirable fragrance is commercially available, but it is difficult to provide a comfortable sense for a long time since, when opening a lid thereof, the fragrance is initially emitted as a strong odor for the occupants of the vehicle. Therefore, for example, in Japanese Unexamined Utility Model Publication (Kokai) No. 1-75435, a fragrance supplying apparatus a lid of which opens and closes is proposed to supply intermittently the fragrance in the vehicle. Also a kind of deodorant accommodating vessel that accommodates a deodorant such as an odor removing agent etc. and a fragrant agent that emits a deodorant component for a long time preventing a bad smell are commercially available. A deodorant accommodating vessel has an exhalation part formed lower and a seat face formed upper.

In the above vehicle installed fragrance supplying apparatus, however, a problem arises in that it initially releases a strong odour which decreases in intensity for the occupants of the vehicle and in this case it is difficult to provide a consistent comfortable fragrance since a fragrance is emitted at a given interval. Furthermore, the above deodorant accommodating vessel, includes only one exhalation, and since diffusion of the deodorant component exclusively depends on natural diffusion, a problem arises in that it is impossible to diffuse the deodorant component in a stable manner. Also the prior vessel is easily movable and a problem arises in that it is difficult to provide external equipment such as a blowing down outlet etc. of an air conditioning unit with the vessel and detach the vessel from the external equipment in order to diffuse the deodorant component in the room. The US-A-4 677 902 shows a deodorizing device similar to the apparatus as described in the preamble of claim 1.

### SUMMARY OF THE INVENTION

The present invention resolves the above-mentioned problem, retains a fresh and comfortable fragrance for a long time, and is detachable to a position a user desires and enables stable diffusion of the deodorant component.

The present invention provides a vehicle installed fragrance supplying apparatus including fragrance supplying means for supplying an interior of an air conditioning duct of a vehicle with a fragrant component and controlling means for operating intermittently said fragrance supplying means based on 1/f rand0m numbers being inversely proportional to frequency f in a power spectrum and changing an intermittent operating time of said fragrance supplying means depending on a driving state. Further the present invention provides a vehicle installed deodorant accommodating vessel formed in a hollow shape to accommodate a deodorant agent in its interior including a pair of penetrated holes formed as an air passage for supplying and excluding air in the interior of the vessel and a knob formed on the outside wall of the vessel.

With the above construction of the vehicle installed fragrance supplying apparatus, the controlling means controls to operate intermittently the fragrance supplying means so that a comfortable and fresh odor may always be obtained in various kinds of vehicle driving states. Further with the above construction of the deodorant accommodating vessel of the present invention, air is supplied from one hole so that air including the deodorant component can be excluded from the other hole to diffuse the deodorant component in a more stable manner. Also the outside wall of the vessel is provided with a knob so that it can be moved and easily mounted on outer equipment such as an air conditioner etc..

### BRIEF DESCRIPTION OF THE DRAWINGS

Figure 1 is a block view showing a construction of a fragrance supplying apparatus provided by an air conditioning unit according to a first embodiment of the present invention;
Fig.2 is a diagram showing a power spectrum of 1/f random numbers;
Fig.3 is a time chart of operation showing a fragrance supply and stop;
Fig.4 is a view showing a change of average operating time;
Fig.5 is a diagram showing a power spectrum of white random numbers;
Fig.6 is a diagram showing a power spectrum of 1/f² randam numbers;
Fig.7 is an exploded partial sectional oblique view showing an external appearance of a deodorant accommodating vessel according to a second embodiment of the invention;
Fig.8 is a sectional view illustrating an internal structure of a deodorant accommodating vessel according to the embodiment;
Fig.9 is an oblique view showing an external appearance of a fragrance controller;
Fig.10 is a schematic view showing a construction of a fragrance controller;
Fig.11 is a partially elliptical sectional view showing an another construction of a deodorant accommodating vessel.

### DESCRIPTION OF THE PREFERRED EMBODIMENTS

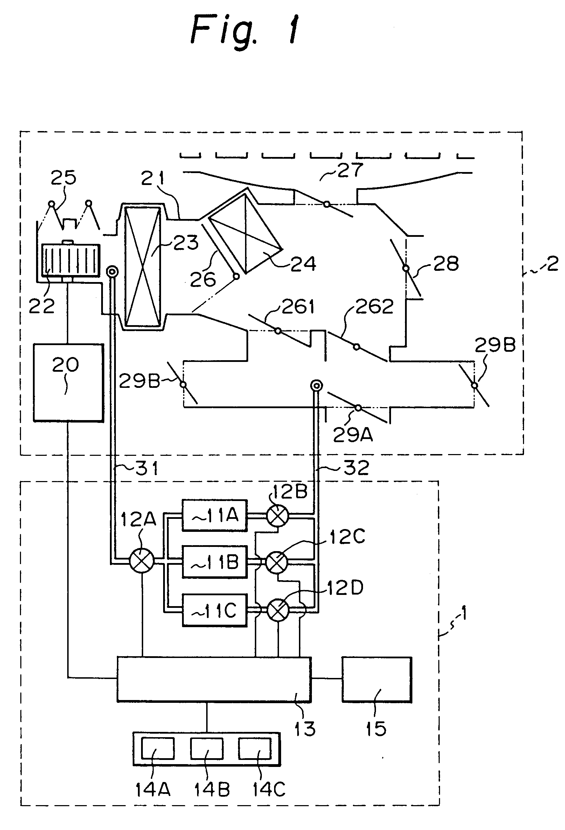

Figure 1 is a block view showing a construction of a fragrance supplying apparatus provided by an air conditioning nuit according to a first embodiment of the present invention. Referring to Fig.1, the overall construction of the preferred embodiment of the fragrance supplying apparatus 2 provided by an air conditioning equipment 1 will be discussed. An air conditioning duct 21 of the air conditioning unit 1 includes an air blower 22, an evaporator 23, a heater core 24 from the upper stream, a switching damper 25 of outer or inner atmosphere, an air mixing damper 26, a maximum cool damper 261, a mode switching damper 262 etc. that switch an air current therein, a defroster 27, a foot blow outlet 28, a center register 29A, and side registers 29B etc. that blow and supply an air conditioning wind. In addition, the above blower 22 is rotated by an air conditioning control circuit 20.

The fragrance supplying apparatus 1 includes cassettes 11A, 11B and 11C accommodating three kinds of volatile fragrances respectively, upper stream pipes of which are assembled and opened for an upper position of the evaporator 23 through an electromagnetic valve 12A. Also, a lower stream pipe 32 of each cassette 11A to 11C is provided with electromagnetic valves 12B, 12C and 12D lower pipes of which are assembled and opened for the duct 21 nearby the registers 29A and 29B.

The above electromagnetic valves 12A to 12D are opened and closed by a fragrance control circuit 13, which is connected as input to selecting switches 14A, 14B and 14C for selecting a kind of fragrance and random numbers producing circuit 15 for producing 1/f random numbers. The above random numbers producing circuit 15 produces 1/f random numbers in which a power spectrum is inverse to frequency f.

In the fragrance supplying apparatus with such a construction, the fragrance control circuit 13 operates intermittently to open or close the electromagnetic valves for the fragrance cassettes 11A-11C selected by the selecting switches 14A to 14C and the upper stream electromagnetic valve 12A according to the random numbers from the above random numbers producing circuit 15. Accordingly, through the upper stream pipe 31 an air current is intermittently introduced into the desired fragrance cassette and a volatile fragrance is intermittently sent and supplied into the duct 21 through the lower stream pipe 32.

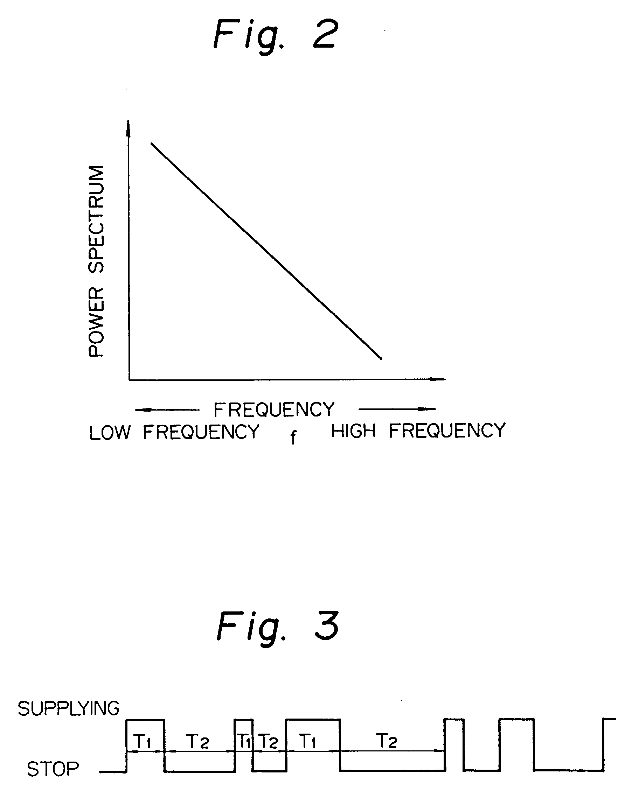

According to the experiments of the inventors, a supplying amount of air current may be 0.3ℓ/min. to 2.6 ℓ/min. and diameters of the upper and lower pipes are determined in order to maintain said amount of air current. In addition, a fragrance supplying time may be 3.3 sec. to 9.5 sec. and a fragrance supplying interval may be 3 min. to 10 min.. Therefore, for example, the above supplying time and the supplying interval are divided into a plurality of stages, and each stage corresponds to a 3 min. supplying interval after a 3.5 sec. supplying time and a 10 min. supplying interval after a 9.5 sec. supplying time. Since at each stage a frequency of a supplying time and interval is determined, the above random numbers producing circuit 15 produces a designated random number at each said stage in which a power spectrum at each stage satisfies a relationship of 1/f as shown in Fig.2.

Thus, the fragrance control circuit 13 intermittently supplies the fragrance into the air conditioning duct 21 due to the supplying time T1 and the supplying interval T2 at each stage (see Fig.3), which is designated by the output of random numbers from the random numbers producing circuit 15.

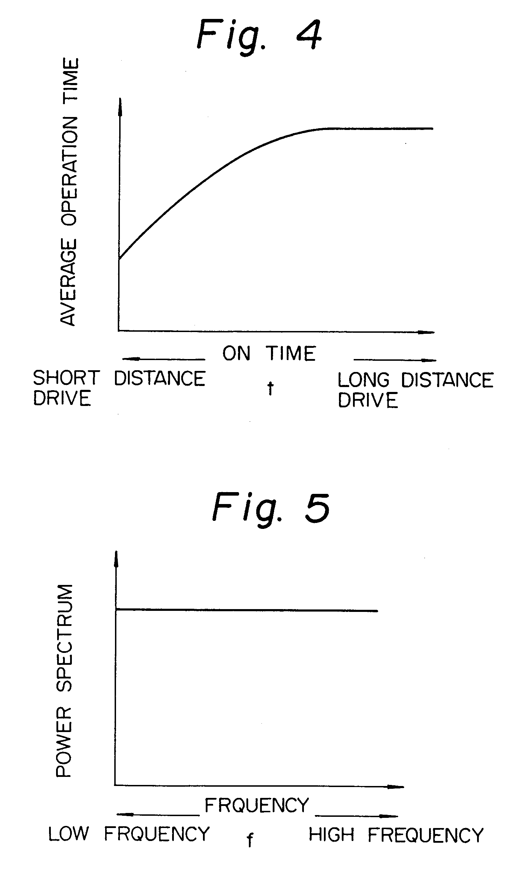

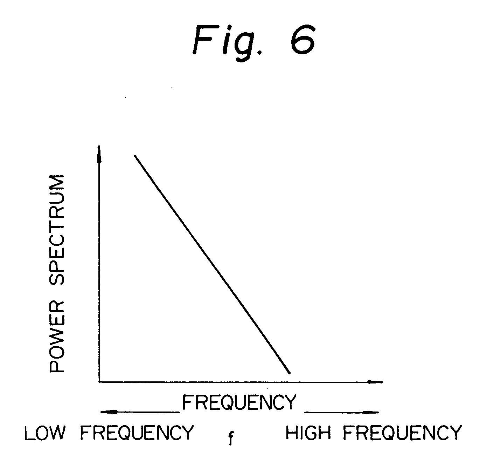

As other random numbers, there are white random numbers in which the power spectrum is constant at each frequency (see Fig.5), or 1/f² random numbers in which the power spectrum is inverse to the square of the frequency (see Fig.6, this Figure shows a vertical axis as a logarithmic scale). The former odor supply has no correlation between an interval of fragrance at a time and an interval of odor immediately before being supplied, so that an unexpected effect is easily provided. On the other hand, the latter odor supply has a strong correlation and so it is lacking in freshness and the stimulus of odor is chronic.

On the contrary, said smell supply based on 1/f random numbers (call as 1/f swing herebelow) provides a comfortable and modrately unexpected stimulus and a consistently pleasant odor for the occupants of the vehicle.

During a comparably short operation of a vehicle, the fragrance is supplied only a few times by the above 1/f swing control and so the effect due to the above swing control is not appreciated. Therefore, the fragrance control circuit 13 supplies a frequent fragrance by making an average operation time of a fragrance supplying interval short for a given time after driving . When the operation time is longer, the fragrance supplying interval is returned to the original interval.

In order to shorten the above average operation time, for example, the supplying time and the supplying interval designated at each stage by the random numbers are multiplied by factors less than 1.0 increasing with an elapsed time after driving.

In another embodiment for changing an intermittent average operation time of fragrance supply, excepting that of the above driving time of the vehicle, fatigue of the occupants is detected with a pulsation interval R-R of the occupants hearts so that the above average time may be shortened as the fatigue is increased, and further as the amount of blower wind in the air conditioning equipment is increased.

As set forth above, according to the embodiments, a comfortable and fresh odor without an unexpected effect may be obtained in various kinds of vehicle driving states.

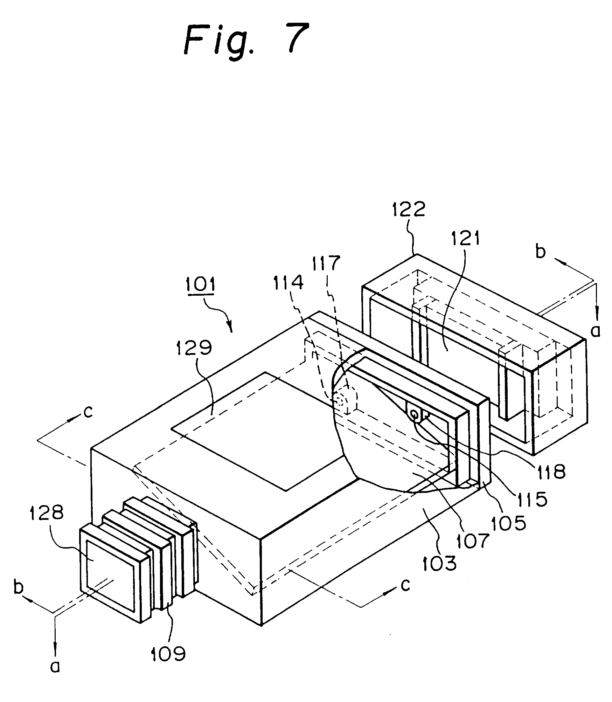

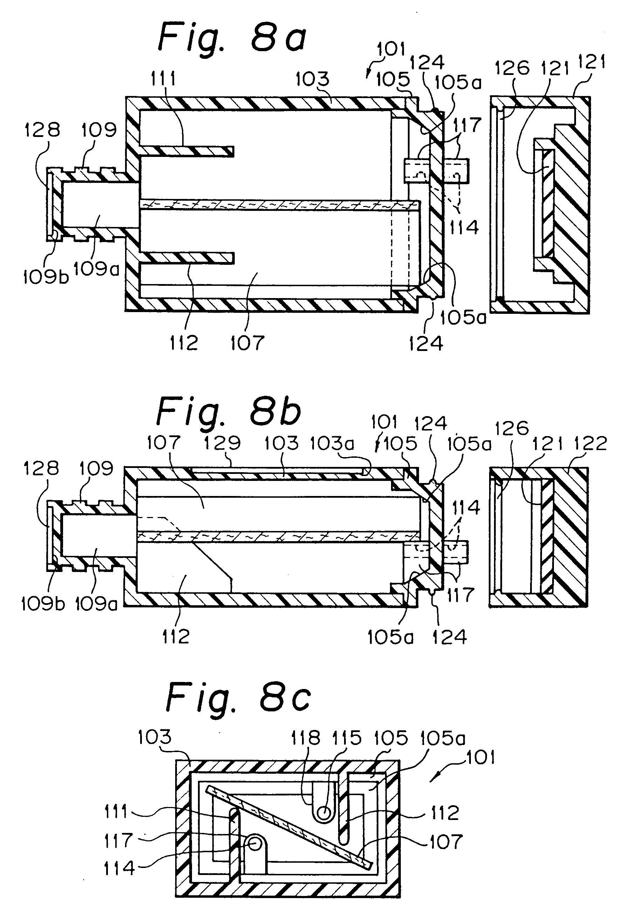

Fig.7 is an exploded partial sectional oblique view showing an external appearance of a deodorant accommodating vessel according to a second embodiment of the invention. Fig.8 is a sectional view illustrating an internal structure of a deodorant accommodating vessel according to the embodiment. In this Fig.8, symbol marks (a), (b) and (c) shows a-a, b-b and c-c sectional views respectively as shown in Fig.7.

Referring to Fig.7, overall construction of a second embodiment of a deodorant accommodating vessel 101 will be discussed. The vessel 101 includes a vessel body 103 made of chemicalproof (fragrantproof) resin stock (such as POM, PBT,PET etc.), one end face of which is formed to be opened in a hollow box-like member and a lid body 105 made of strong chemicalproof resin stock as well, which closes an opening of the vessel body 103.

The deodorant accommodating vessel 101 accommodates a filter paper 107 that impregnates a fragrance agent and a deodorant such as a smell removing agent etc.. The lid body 105 inserted in the opening portion of the vessel body 103 is welded with supersonic waves and fixed to the vessel body 103 after accommodating the filter paper 107 within the vessel body 103.

Next in the vessel body 103, an outside wall of an end face opposite to the lid body 105 is provided with a projected knob 109 having hollow portion 109a communicated with the interior of the vessel body 103. And an inner side wall of the knob 109 is provided with a pair of lock plates 111 and 112 for arranging the filter paper 107 aslant in the vessel body 103.

Also the lid body 105 is provided with a pair of pipes 117 and 118 having holes 114 and 115 for supplying air in the interior of the vessel body 103 and excluding air from it, which is formed so as to put the filter paper 107 between them. And an inner wall of the lid body 105 is provided with a sloping surface 105a that is formed to be applied to one corner of the filter paper 107 so as to be able to fix the other side of the filter paper 107 to an inner side wall of the knob 109 of the vessel body 103.

On one hand, a peripheral edge of outer wall of the lid body 105 is provided with a projecting edge 124 for equipping it with a stopper 122 that has a gasket 121 preventing the deodorant component from escaping outside when the vessel 101 is not used, the projecting edge 124 being applied to an outside end of the pipes 117 and 118 to engage a projecting edge 126 formed in the stopper 122 in order to make the stopper 122 detachable.

Also an end surface of the knob 109 and an upper surface of the vessel body 103 are respectively provided with concave parts 109b and 103a for sticking seals 128 and 129 indicating kinds of deodorant agents (fragrant agent or odor removing agent) accommodated in the interior of the vessel in order to provide a user with knowledge of its contents by sticking the seals 128 and 129 on each concave part 109b and 103a.

In this way since the deodorant accommodating vessel 101 is provided with a pair of pipes 117 and 118 having the holes 114 and 115 for supplying air in the interior of the vessel and excluding air from it, when supplying air from one pipe 117(or 118) into the interior of the vessel, air including a deodorant component made volatile from the filter paper 107 accommodated in the interior of the vessel, is excluded from the other pipe 118 (or 117 ). Also this amount of excluded deodorant component is determined by an amount and a frequency of supplying air for the interior of the vessel so that if air supply into the interior of the vessel is controlled, the deodorant agent may be diffused at a desired rate.

Also in the deodorant accommodating vessel 101 according to the present embodiment, the pipes 117 and 118 are formed to put the filter paper 107 between them, in the interior of the vessel an air passage is formed by the lid body 105 between an upper and lower end edges of the filter paper 107 and the vessel body 103 and between a side end edge of the lid body 105 and the lid body 105, and an air passage is formed by the hollow part 109a of the knob 109 so that air supplied from one pipe 117(or 118) is excluded from the other pipe 118(or 117) through an upper, lower, left and right end edge of the total filter paper 107. Therefore when supplying air from one pipe 117 (or 118), the total deodorant component that is made volatile from a front and back surface may be introduced and excluded into the other pipe 118 (or 117). Accordingly, the deodorant component made volatile partly from the filter piper 107 does not remain so that the deodorant impregnated amount at the portion is not greater than that at the other portion. Consequently the deodorant agent impregnated in the filter paper 107 is made volatile from the front and back surface at a given rate to be able to diffuse the deodorant component more stably.

Also then in the deodorant accommodating vessel 101, since the knob 109 is formed the vessel may be moved. In the case of using and mounting it on outer equipment of odor control equipment discussed herebelow, the deodorant accommodating vessel 101 allows for universal detachment to the outer equipment to be easy.

In addition in the deodorant accommodating vessel 101, since the seals 128 and 129 showing kinds of the deodorant agents accommodated in the interior of the vessel is stuck on the concave parts 109b and 103a formed on the end surface of the knob 109 and the upper surface of the vessel body 103, it is difficult to strip the sheets 128 and 129. Also since the projecting edge 124 formed on the peripheral edge of the outer wall of the lid body 105 is equipped with the stopper 122 having the gasket 121, when not using the vessel 101 the equipped stopper may prevent the deodorant component from escaping outside.

Then the case of using and mounting the deodorant accommodating vessel 101 on a vehicle installed odor control equipment will be discussed.

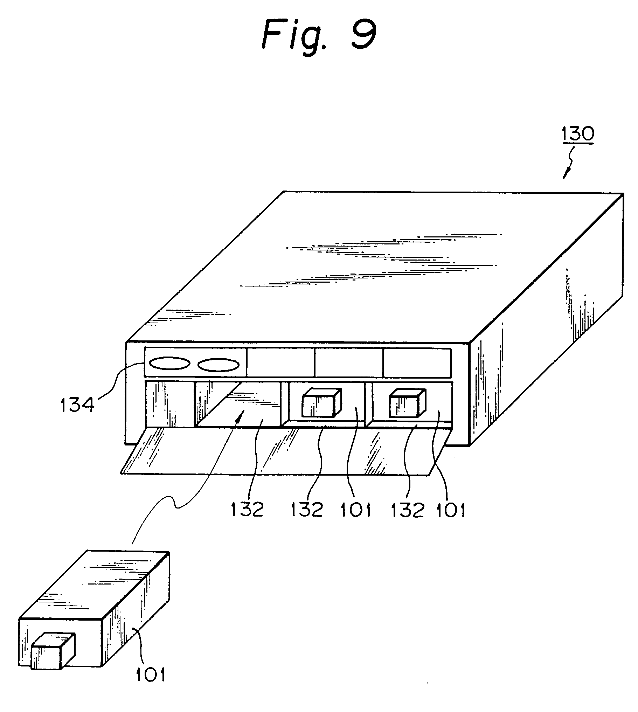

As shown in Fig.9, an odor control unit 130 is provided with three equiping parts 132 for equipping the deodorant accommodating vessel 101 from the front to make three deodorant accommodating vessels 101 universally detachable and equipprd therewith by pushing in the equipping part 132 having the knob 109 of the deodorant accommodating vessel 101.

The odor control equipment is such that it supplies air for the deodorant accommodating vessel 101 equipped with a desired deodorant agent in the three deodorant accommodating vessels 101 equipped each equipping part 132 with , blows a desired deodorant component (i.e. fragrant component or smell removing component) from a blowing outlet of a vehicle installed air conditioner, and removes a bad odor in the vehicle room. A front surface thereof is provided with an operating panel 134 including display lumps that display demanding switches and operated states for setting the deodorant accommodating vessel used and the blowing amount of the deodorant agent outside.

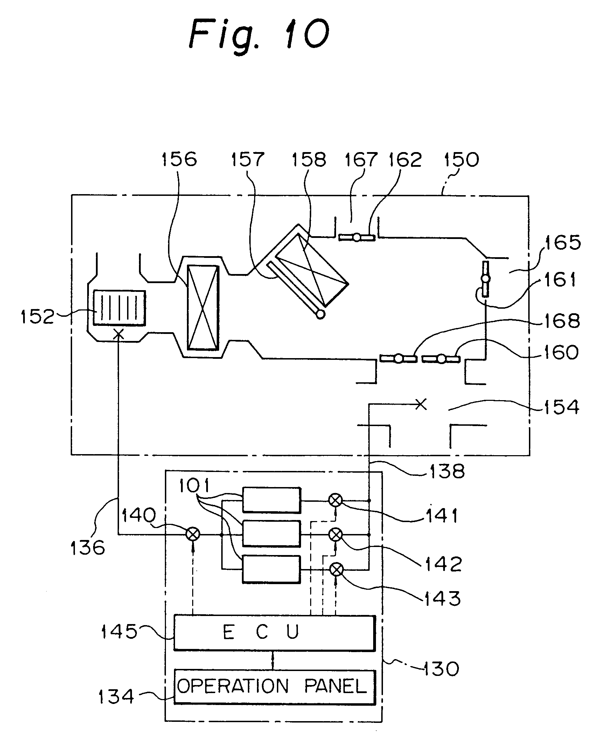

On one hand, as shown in Fig.10, the smell control equipment 130 is connected to an inlet pipe 136 that introduces air from the blower 152 of a vehicle installed air conditioner 150 into the deodorant accommodating vessel 101, and an outlet 138 that introduces air including the deodorant component excluded from the deodorant accommodating vessel 101 into a FACE blow outlet 154 of the vehicle installed air conditioner 150.

And the inlet pipe 136 is provided with an inlet electromagnetic valve 140 for introducing the air from the blower 152 into each deodorant accommodating vessel 101 equiping part at the same time. The outlet pipe 138 is provided with three outlet electromagnetic valves 141, 142 and 143 for introducing the air including the deodorant component excluded from each deodorant accommodating vessel 101 individually. In addition the inlet electromagnet valve 140 and the outlet valve 141 (or 142, 143) are connected to the pipes 117 and 118 by the gasket etc. of rubber in the case of equipping the equipping part 132 with the deodorant accommodating vessel 101 and cutting an air passage in the case of not equipping the equipping part 132 with the deodorant accommodating vessel 101.

Each of the above electromagnetic valves 140 to 143 are driven according to an electronic control unit (ECU) 145 made with a micro computer. That is, according to the manipulation of the demanding switch provided by the operating panel 134 in the case of designating the deodorant accommadating vessel 101 and a blowing amount of the deodorant component, ECU 145 controls to open the outlet electromagnetic valve 141 (or 142, 143) corresponding to the designated deodorant accommodating vessel, and open and close the inlet electromagnetic valve 140 with a frequency depending on the blowing amount of the deodorant agent. Consequently, there is formed an air passage leading to a FACE blowing outlet 154 of the vehicle installed air conditioner 150 from a lower stream of the blower 152 of the vehicle installed air conditioner 150 through the inlet pipe 136 to the designated deodorant accommodating vessel 101 and the outlet pipe 138 with a frequency corresponding to the blowing amount of the designated deodorant component. And in the deodorant accommodating vessel 101 according to the present embodiment, since the air is supplied in the interior of the vessel from one pipe 117 (or 118) the deodorant component is excluded stably from the other pipe 118 (or 117), only a desired amount of the selected deodorant component may be supplied in the vehicle room to satisfactorily remove a bad odor in the vehicle .

Referring to Fig.10, there is known the vehicle installed air conditioner 150 that cools the air from the blower 152 in an evaporator 156, distributes this among the air passing through a heater core 158 and the air bypassing the heater core 158 in an air mixing damper 157, mixes the distributed air, excludes the mixed air from a FACE blowing outlet 154, a foot blowing outlet 165 and a DEF blowing outlet 167 respectively through dampers 160, 161 and 162, and directly introduces a cool air that is cooled in the evaporator 156 into the FACE blowing outlet 154 opening the max cool damper 168 as necessary.

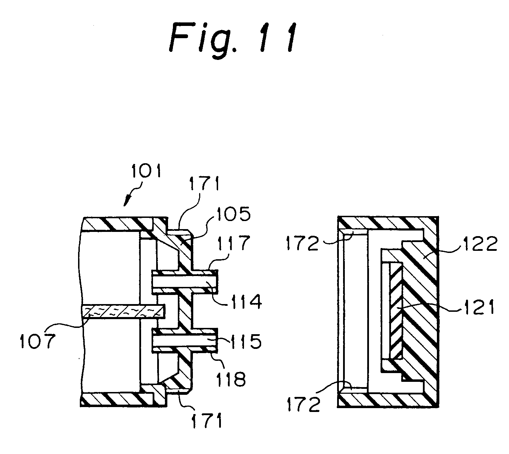

The foregoing is the discussion for the deodorant accommodating vessel 101 according to the present embodiment and its used examples, the deodorant accommodating vessel of the invention is not limited to the above embodiments but employs various kinds of modifications. For example, in the above embodiment the seals are stuck to indicate the kind of the deodorant agents in the interior of the vessel, while if the vessel is equipped with a molded-in insert a display of the kinds of deodorant agents may be printed on during the forming of the vessel at the same time giving the vessel an excellent design. Also in the above embodiment, the projecting edge 124 is formed in the peripheral edge of the outside wall of the lid body 105 is engaged with the projecting edge 126 formed in the stopper 122, thereby the gasket 121 is applied to the outside end of the pipes 117 and 118, and the deodorant component is prevented from escaping outside when not using the vessel, as shown in Fig.11, the deodorant accommodating vessel 101 and the stopper 122 may be formed in a cylindrical shape, the lid body 105 and the stopper 122 may be provided with a pair of screws 171 and 172, the screws 171 and 172 are screwed when not using the vessel, and thereby the gasket 121 may be applied to the outside end of the pipes 117 and 118 to prevent the deodorant component from escaping with more reliability. In addition in Fig.11, the parts denoted in the above embodiment and a detailed description are omitted.

As set forth above, according to the deodorant accommodating vessel of the present invention, air is supplied from one hole so that air including the deodorant component can be excluded from the other hole to diffuse the deodorant component in a more stable manner. Also the outside wall of the vessel is provided with a knob so that it can be moved and easily mounted on outer equipment such as an air conditioner etc..

## Claims

1. A vehicle installed fragrance supplying apparatus (2) for supplying a fragrant component to be carried in an air flow produced by an air blower (22) characterised in that the apparatus comprises:
fragrance supplying means provided with fragrance supplying cassettes (11A-11C) for supplying the fragrance and introducing an air flow from an air blower (22) and carry said fragrance with the air flow,
fragrance swing control means provided with a fragrance control circuit (13) for setting the on and off time at random for introducing an air flow into said fragrance supplying cassettes (11A-11C), the fragrance control circuit (13) being controlled at random so that the fragrance supplying and stopping time for supplying said fragrance from said fragrance supplying cassettes (11A-11C) is controlled at random and a comfortable and moderately unexpected stimulus and a consistently pleasant freshness is provided for the occupants.

2. A vehicle installed fragrance supplying apparatus (2) according to claim 1, in which said fragrance swing control means is provided with a random numbers producing circuit (15) for determining the fragrance supplying and stopping time based on 1/f random numbers in which the power spectrum is inverse to the frequency.

3. A vehicle installed fragrance supplying apparatus (2) according to claim 1 or 2, in which said fragrance supplying means is provided with a plurality of different fragrance supplying cassettes (11A-11C) and said plurality of control valves (12A-12D) are provided at fragrance outlets corresponding to said fragrance supplying cassettes (11A-11C).

4. A vehicle installed fragrance supplying apparatus (2) according to claim 3, in which said fragrance supplying means is provided with switching means for switching and selecting said fragrance supplying cassettes (11A-11C).

5. A vehicle installed fragrance supplying apparatus (2) according to claim 1, in which said fragrance supplying cassettes (11A-11C) are used in an air conditioner for supplying an interior of a casing in said air conditioner having an air blower (22) with a fragrant component to carry said fragrant component in an air flow from a conditioned air blowing outlet of said air conditioner due to an operation of said air blower (22) and exhaling it in an interior of a vehicle and:
fragrance supplying means used with said air conditioner comprising,
a housing,
a vessel (101) equipped for the housing and accommodating a fragrant component,
an air current introducing the passage of an air flow in said casing into the vessel (101) in order to carry said fragrant component in the vessel (101) with an air flow in the casing of said air conditioner and exhaling it in an interior of the casing,
a returning passage of an air flow to the interior of the casing to carry the fragrant component in an air flow introduced into the vessel (101),
control valves (12A-12D) controlled by commands of said fragrance control circuit (13) and arranged at one side of both air passages at least.

6. A vehicle installed fragrance supplying apparatus (2) according to claim 5, provided with a plurality of vessels (101) each of which accommodates a different fragrant component.

7. A vehicle installed fragrance supplying apparatus (2) according to claim 6, in which an air outlet of said air conditioner is open in the direction of the occupants in the vehicle.

8. A vehicle installed fragrance supplying apparatus (2) according to claim 6, in which said air current introducing the passage of an air flow in the casing of said air conditioner into said vessel (101) is open to the lower stream side of said air blower (22) and said air returning passage of said fragrant component to the interior of said casing is open to the air blowing outlet of said air conditioner.

## Patentansprüche

1. Duftstoffversorgungsvorrichtung (2) zum Einbau in ein Fahrzeug zur Zuführung einer Duftstoffkomponente, die in einem mittels eines Luftgebläses (22) erzeugten Luftstrom zu transportieren ist**, dadurch gekennzeichnet,** daß die Vorrichtung aufweist
eine Duftstoffversorgungseinrichtung, die mit Duftstoffversorgungskassetten (11A-11C) zur Zuführung des Duftstoffs und zur Einführung eines Luftstroms von einem Luftgebläse (22) aus und zum Transport des Duftstoffs mit dem Luftstrom ausgestattet ist,
eine Duftstoffaustauschsteuereinrichtung, die mit einem Duftstoffsteuerkreis (13) zur willkürlichen Einstellung der EIN- und AUS-Zeit zur Einführung eines Luftstroms in die Duftstoffversorgungskassetten (11A-11C) ausgestattet ist, wobei der Duftstoffsteuerkreis (13) willkürlich so gesteuert wird, daß die Duftstoffzuführungs- und -anhalte-Zeit zur Zuführung des Duftstoffs von den Duftstoffversorgungskassetten (11A-11C) willkürlich gesteuert wird und eine komfortable und ziemlich unerwartete Anregung und eine entsprechend angenehme Frische für die Insassen geschaffen wird.

2. Duftstoffversorgungsvorrichtung (2) zum Einbau in ein Fahrzeug, nach Anspruch 1, **dadurch gekennzeichnet,** daß die Duftstoffaustauschsteuereinrichtung mit einer Schaltung (15) zur Erzeugung von Zufallszahlen zur Bestimmung der Duftstoffzuführungs- und -anhalte-Zeit auf der Grundlage von 1/f Zufallszahlen ausgestattet ist, wobei das Leistungsspektrum zur Frequenz umgekehrt proportional ist.

3. Duftstoffversorgungsvorrichtung (2) zum Einbau in ein Fahrzeug, nach Anspruch 1 oder 2, **dadurch gekennzeichnet,** daß die Duftstoffversorgungseinrichtung mit einer Vielzahl unterschiedlicher Duftstoffversorgungskassetten (11A-11C) ausgestattet ist und daß die Vielzahl der Steuerventile (12A-12D) an Duftstoffauslässen, die den Duftstoffversorgungskassetten (11A-11C) entsprechen, angeordnet ist.

4. Duftstoffversorgungsvorrichtung (2) zum Einbau in ein Fahrzeug, nach Anspruch 3, **dadurch gekennzeichnet**, daß die Duftstoffversorgungseinrichtung mit einer Schalteinrichtung zum Schalten und Auswählen der Duftstoffversorgungskassetten (11A-11C) ausgestattet ist.

5. Duftstoffversorgungsvorrichtung (2) zum Einbau in ein Fahrzeug, nach Anspruch 1, **dadurch gekennzeichnet**, daß die Duftstoffversorgungskassetten (11A-11C) in einer Klimaanlage zur Versorgung des Inneren eines Gehäuses in dieser Klimaanlage, die ein Luftgebläse (22) besitzt, mit einer Duftstoffkomponente verwendet werden, um diese Duftstoffkomponente in einem Luftstrom von einem Ausblasauslaß für klimatisierte Luft der Klimaanlage aus infolge des Betriebs des Luftgebläses (22) und zum Ausblasen in das Innere eines Fahrzeugs zu transportieren,
wobei die in Verbindung mit der Klimaanlage verwendete Duftstoffversorgungseinrichtung aufweist
ein Gehäuse,
ein Gefäß (101), das zur Aufnahme einer Duftstoffkomponente ausgestattet ist,
einen einen Luftstrom in das Gefäß (101) einführenden Kanal für die Luftströmung in dem Gehäuse, um die Duftstoffkomponente in dem Gefäß (101) mit einer Luftströmung in dem Gehäuse der Klimaanlage zu transportieren und sie im Inneren des Gehäuses abzugeben,
einen Rücklaufkanal für die Luftströmung zu dem Inneren des Gehäuses, um die Duftstoffkomponente in einer in das Gefäß (101) eingeführten Luftströmung zu transportieren,
Steuerventile (12A-12D), die durch Befehle des Duftstoffsteuerkreises (13) gesteuert und an mindestens einer Seite von beiden Luftkanälen angeordnet sind.

6. Duftstoffversorgungsvorrichtung (2) zum Einbau in ein Fahrzeug, nach Anspruch 5, **gekennzeichnet durch** eine Vielzahl von Gefäßen (101), deren jedes eine andere Duftstoffkomponente enthält.

7. Duftstoffversorgungsvorrichtung (2) zum Einbau in ein Fahrzeug, nach Anspruch 6, **dadurch gekennzeichnet**, daß ein Luftauslaß der Klimaanlage in Richtung auf die Insassen des Fahrzeugs offen ist.

8. Duftstoffversorgungsvorrichtung (2) zum Einbau in ein Fahrzeug, nach Anspruch 6, **dadurch gekennzeichnet**, daß der eine Luftströmung in das Gefäß (101) einführende Kanal für die Luftströmung in dem Gehäuse der Klimaanlage zu der stromabwärtigen Seite des Luftgebläses (22) offen ist und daß der Luftrücklaufkanal der Duftstoffkomponente zu dem Inneren des Gehäuses zu dem Luftblasauslaß der Klimaanlage offen ist.

## Revendications

1. Dispositif d'alimentation en parfum installé dans un véhicule (2) pour délivrer un composant parfumé qui doit être transporté dans un écoulement d'air produit par une souffleuse d'air (22) caractérisé ce que le dispositif comprend :
un moyen d'alimentation en parfum procuré par des cassettes d'alimentation en parfum (11A -11C) pour délivrer le parfum et introduire un écoulement d'air à partir d'une souffleuse d'air 22 et transporter ledit parfum avec l'écoulement d'air,
un moyen de commande de cadencement de parfum assuré par un circuit de commande de parfum 13 pour fixer la durée d'alimentation et la durée de non-alimentation au hasard pour introduire un écoulement d'air dans lesdites cassettes d'alimentation en parfum (11A-11C), le circuit de commande de parfum 13 étant commandé au hasard de sorte que le temps d'alimentation en parfum et le temps d'arrêt d'alimentation en parfum pour délivrer ledit parfum à partir des cassettes d'alimentation en parfum (11A-11C) est commandé au hasard et un stimulus confortable et modérément inattendu et une fraîcheur plaisante continue est procurée aux occupants.

2. Dispositif d'alimentation en parfum (2) installé dans un véhicule selon la revendication 1, dans lequel ledit moyen de commande de cadencement de parfum est muni d'un circuit de production de nombres aléatoires 15 pour déterminer le temps d'alimentation et d'arrêt de parfum basé sur 1/f nombres aléatoires dans lequel le spectre de puissance est l'inverse de la fréquence.

3. Dispositif d'alimentation en parfum (2) installé dans un véhicule selon la revendication 1 ou 2, dans lequel ledit moyen d'alimentation en parfum est procuré avec une multitude de cassettes d'alimentation en parfum différentes (11A-11C) et ladite multitude de soupapes de commande (12A-12D) sont prévues aux orifices de sortie du parfum correspondant auxdites cassettes d'alimentation en parfum (11A-11C).

4. Dispositif d'alimentation en parfum (2) installé dans un véhicule selon la revendication 3, dans lequel ledit moyen d'alimentation en parfum est muni d'un moyen de commutation pour commuter et sélectionner lesdites cassettes d'alimentation en parfum (11A-11C).

5. Dispositif d'alimentation en parfum (2) installé dans un véhicule selon la revendication 1, dans lequel lesdites cassettes d'alimentation en parfum (11A-11C) sont utilisées dans un conditionneur d'air pour délivrer a l'intérieur d'un boîtier dudit conditionneur d'air ayant une souffleuse d'air (22) un composant parfumé afin de transporter ledit composant parfumé dans un écoulement d'air à partir de l'orifice de soufflage d'air conditionné dudit conditionneur d'air dû à l'actionnement de ladite souffleuse d'air (22) et le sortir à l'intérieur du véhicule et :
un moyen d'alimentation en parfum utilisé avec ledit conditionneur d'air comprenant,
un logement,
un récipient (101) équipé pour le logement et recevant un composant parfumé,
un courant d'air introduisant le passage d'un écoulement d'air dans ledit boîtier dans le récipient (101) afin de transporter ledit composant parfumé dans ledit récipient (101) avec un écoulement d'air dans le boîtier dudit conditionneur d'air et le sortant à l'intérieur du boîtier,
un passage de retour d'un écoulement d'air à l'intérieur du boîtier pour transporter le composant parfumé dans un écoulement d'air introduit dans le récipient (101), des soupapes de commandes (12A-12D) commandées par des ordres dudit circuit de commande de parfum (13) et disposées sur au moins un côté des deux passages d'air.

6. Dispositif d'alimentation en parfum (2) installé dans un véhicule selon la revendication 5, muni d'une multitude de récipients 101 dont chacun reçoit un composant parfumé différent.

7. Dispositif d'alimentation en parfum (2) installé dans un véhicule selon la revendication 6, dans lequel un orifice de sortie d'air dudit conditionneur d'air est ouvert dans la direction des occupants du véhicule.

8. Dispositif d'alimentation en parfum (2) installé dans un véhicule selon la revendication 6, dans lequel ledit courant d'air introduisant le passage d'un écoulement d'air dans le boitier dudit conditionneur d'air dans ledit récipient (101) est ouvert sur le côté écoulement aval de ladite souffleuse d'air (22) et ledit passage de retour d'air dudit composant parfumé à l'intérieur dudit boîtier est ouvert vers l'orifice de sortie de soufflage d'air dudit conditionneur d'air.
